# EUROPEAN PATENT SPECIFICATION

(11) **EP 4 032 760 B1**
(45) Date of publication and mention of the grant of the patent: **01.04.2026**
(21) Application number: 22153096.7
(22) Date of filing: 25.01.2022
(51) Int. Cl.: B60S 1/66, B60R 9/04, H05B 3/36, F28D 15/00, F28F 27/00

(54) **METHOD AND APPARATUS FOR THE MELTING OF SNOW AND ICE FROM VEHICLE EXTERIORS**
VERFAHREN UND VORRICHTUNG ZUM SCHMELZEN VON SCHNEE UND EIS VON FAHRZEUGAUSSENFLÄCHEN
PROCÉDÉ ET APPAREIL DESTINÉS À FAIRE FONDRE LA NEIGE ET LA GLACE SUR LES EXTÉRIEURS D'UN VÉHICULE

(30) Priority: 26.01.2021 EP 21020034
(43) Date of publication of application: 27.07.2022
(73) Proprietor: Oskwarek, John, Iselin, NJ 08830 (US)
(72) Inventor: Oskwarek, John, Iselin, NJ 08830 (US)
(74) Representative: Hertin und Partner Rechts- und Patentanwälte PartG mbB

(56) References cited:
- US-A1- 2012 193 338
- US-A1- 2017 238 363
- US-A1- 2019 263 361
- US-A1- 2020 023 816

## Description

### CROSS-REFERENCE TO RELATED APPLICATIONS

This non-provisional patent application is a continuation-in-part application under 35 U.S.C. §120 of U.S. patent application Ser. No. 16/535,229 for "Method And Apparatus For The Melting Of Snow And Ice From Vehicle Exteriors", filed August 8, 2019, which claims the benefit under 35 U.S.C. §120 of U.S. patent application Ser. No. 15/384,465 for "Method And Apparatus For The Melting Of Snow And Ice From Vehicle Exteriors", filed December 20, 2016, which claims the benefit under 35 U.S.C. §199(e) of U.S. Provisional Patent Application No. 62/270,351 for "Method And Apparatus For The Melting Of Snow And Ice From Vehicle Exteriors", filed December 21, 2015.

### FIELD OF THE INVENTION

The present invention is directed to a method and apparatus for the melting of snow and ice from vehicle exteriors, and, more particularly, to a method and apparatus for melting snow or ice from an exterior of a vehicle, and preventing the accumulation thereon, by means of heating elements secured within a vehicle's exterior.

### BACKGROUND OF THE INVENTION

In cold weather climes, the accumulation of snow and/or ice on the exterior of vehicles can be problematic in many different contexts. Unchecked, such accumulation can slow or even bring to a halt transportation of people and cargo, perhaps at its worst costing lives and/or the loss of significant sums of money.

Indeed, vehicles are often designed with aerodynamic and safety engineering considerations in mind. Companies and their engineers spend significant resources on the aerodynamic and safety design of, by way of example, automobiles and aircraft. Even the smallest amount of snow or ice buildup on the exteriors of such transport vehicles can negatively impact such aerodynamic and safety designs and decrease operability.

Currently the airline industry spends millions of dollars on de-icing compounds to de-ice aircraft before take-off. Application of such needs to be closely monitored and, in case of delays, even reapplied.

Automobile owners, having no such system, are often forced to manually remove snow and ice from their automobile exteriors. Needless to say, such removal is not easy or comfortable. Due to changes in the laws of many cold weather clime States, such snow/ice removal is now mandatory. Drivers who fail to remove snow/ice may be cited/ticketed for failing to remove such snow/ice for creating unsafe driving conditions.

While many vehicles are equipped with automatic snow/ice removal systems for their windows, U.S Patent Application, Publication No. 2017/238363 A1 ("the '363 Publication"), discloses an apparatus or methodology for the melting of snow/ice from vehicle exteriors. However, the '363 Publication does not disclose such an apparatus or methodology for melting snow/ice from a truck bed. U.S. Patent Application, Publication No. 2019/263361 ("the '361 Publication") discloses only briefly that such an apparatus or methodology for melting snow/ice can be utilized in a truck bed, but does not account for the environmental challenges and/or the avoidance of damages due to heavy cargo loads in such truck beds. The '361 Publication fails to disclose such an apparatus or methodology which can withstand such environmental challenges and/or damages due to heavy cargo loads. Thus, as can be seen, the state of the art does not disclose a snow/ice melt system that can account in truck beds for the environmental challenges and/or to avoid damages due to heavy cargo loads and therefore there is a need which as heretofore not been met or resolved.

### SUMMARY OF THE INVENTION

Accordingly, starting from the state of the art as described above, the present invention is directed to and based on the task of providing a method and apparatus for the prevention of the accumulation of snow and ice on a vehicle truck bed, and/or which melts accumulated snow and ice from the vehicle, by means of heating elements secured within the vehicle's truck bed. The task is solved according to the invention by an apparatus for melting snow from an exterior-facing portion of a truck bed liner positioned within a truck bed of a vehicle as set out in independent claims 1 and 2 and by a method of melting snow from an exterior-facing portion of a truck bed liner positioned within a truck bed of a vehicle as set out in independent claims 6 and 7. Preferred features of the invention are set out in the dependent claims. The heating elements consist of electric radiant heating cables or hydronic radiant heating tubes. In one embodiment, the vehicle is at least any one of, but not limited to, cars, trucks, vans, buses, minivans, Sports Utility Vehicles (SUV's), cross-over vehicles, trailer trucks, electric vehicles (EVs), hybrid electric vehicles (HEVs), aircrafts, trains, and rail vehicles.

As taught by the present invention, the electric heat system can be optioned to function using a remote power source, the vehicle power source, or both. Additionally, as taught by the present invention, the hydronic heat system utilizes hot fluid (water/glycol solution) from the radiator or engine block as its heating medium.

The present invention allows for automatic snow and ice melting using environmental feedback from temperature and precipitation sensors. These sensors may be integral to the vehicle's environmental/engine management systems and/or separate sensors installed as part of the snowmelt system.

In an embodiment of the present invention, an apparatus for melting snow and/or ice on a vehicle comprises a precipitation sensor, a surface temperature sensor, an ambient temperature sensor, a heater, and a programmable controller. The programmable controller comprises a memory unit to store a cut off surface temperature Tc, and a set of program modules. The programmable controller further comprises a processor to execute the set of program modules. The set of program modules comprises an input module and a heater control module. The input module, executed by the processor, is configured to receive information regarding an ambient temperature Ta outside the vehicle via the ambient temperature sensor. Further, the input module, executed by the processor, is configured to receive information regarding one of presence and absence of precipitation outside the vehicle, via the precipitation sensor. Furthermore, the input module, executed by the processor, is configured to receive information regarding a surface temperature Ts on an exterior portion of the vehicle via the surface temperature sensor. The heater control module, executed by the processor, is configured to deactivate the heater based on the surface temperature Ts being greater than the cut off surface temperature Tc. Further, heater control module is configured to activate the heater based on the ambient temperature Ta being lower than freezing point of water and precipitation being present outside the vehicle, thereby melting snow and/or ice on the vehicle because of heat generated by the heater upon activation.

In an embodiment of the present invention, the heater is at least one of an electric heater and a hydronic heater. In one embodiment, the electric heater is electrically coupled to at least one of the group consisting of, an alternator, an onboard power system, and one or more remote electric power sources, via a relay. In one embodiment, the onboard power system includes at least any one of, but not limited to, onboard batteries and supercapacitors. The electric heater comprises a plurality of heating cables disposed on an exterior portion of the vehicle, electrically coupled to an electric power source include, but not limited to, an alternator, an onboard power system, and one or more remote electric power sources, via a relay or multiple relays, the plurality of heating cables configured to receive electric power from the electric power source include, but not limited to, an alternator and an onboard power system, and heat the exterior portion of the vehicle, melting snow and/or ice on the vehicle. Further, the hydronic heater comprises a plurality of heating pipes disposed on the exterior portion of the vehicle, coupled to a radiator of the vehicle via an electric pump, and wherein the hydronic heater is configured to receive at least one of heated engine coolant or water from the radiator or engine block jacket, and circulate the heated engine coolant or water, thereby transferring heat to the exterior portion of the vehicle.

In an embodiment of the present invention, a method of melting snow and/or ice on a vehicle, the apparatus comprises storing in a memory unit, a cut off surface temperature, and a set of program modules. Further, the method comprises receiving, by a processor executing an input module, information regarding an ambient temperature outside the vehicle, from an ambient temperature sensor. Further, the method comprises receiving, by the processor executing the input module, information regarding one of presence and absence of precipitation outside the vehicle, from the precipitation sensor. Further, the method comprises receiving, by the processor executing the input module, information regarding a surface temperature on an exterior portion of the vehicle, from the surface temperature sensor. Further, the method comprises deactivating, by the processor executing a heater control module, the heater based on the surface temperature being greater than the cut off surface temperature. Further, the method comprises deactivating, by the processor executing a heater control module, based on certain safeties being triggered. Further, the method comprises activating the heater, by the processor executing the heater control module, based on the ambient temperature being lower than a freezing point of water, and precipitation outside the vehicle being present, thereby melting snow and/or ice on the vehicle.

In an embodiment of the present invention, the truck bed assembly comprises a plurality of heating elements that are embedded and/or secured within the truck bed assembly. The truck bed assembly further comprises a truck bed liner. The plurality of heating elements are securely embedded within the truck bed liner. The truck bed assembly further comprises an insulating material. The insulating material is provided between the truck bed liner and a truck bed. Further, the heating elements has one or more terminals. The terminals of the heating elements are connected to an electric power source, thereby heating the plurality of heating elements. The heat generated by the heating elements conductively transfers to the exterior portion of the vehicle via the thermally conductive layer/truck bed liner, thereby melting the snow from the exterior portion of the vehicle roof and/or truck bed liner.

In an embodiment of the present invention, the truck bed assembly comprises a truck bed liner assembled with a plurality of heating elements. The truck bed assembly further comprises a separate assembly for the heating elements. The heating elements are assembled in the separate assembly below the truck bed liner. The truck bed further comprises an insulating material. The insulating material is provided between the truck bed and the separate assembly of the heating elements. Further, the heating elements has one or more terminals. The terminals of the heating elements are connected to an electric power source, thereby heating the plurality of heating elements. The heating elements conductively transfers the heat to the exterior portion of the vehicle via the thermally conductive layer/truck bed liner, thereby melting the snow from the exterior portion of the vehicle roof and/or truck bed liner.

The present invention, including its features and advantages, will become more apparent from the following detailed description with reference to the accompanying drawings.

### BRIEF DESCRIPTION OF DRAWINGS

The foregoing summary, as well as the following detailed description of the invention, is better understood when read in conjunction with the appended drawings. For the purpose of illustrating the invention, exemplary constructions of the invention are shown in the drawings. However, the invention is not limited to the specific methods and structures disclosed herein. The description of a method step or a structure referenced by a numeral in a drawing is applicable to the description of that method step or structure shown by that same numeral in any subsequent drawing herein.
FIG. **1** is a block diagram of an apparatus for melting of snow and/or ice from vehicles, in accordance with various embodiments of the present invention;
FIG. **2** is a block diagram of an electric heater, in accordance with various embodiments of the present invention.
FIG. **3** is an exemplary illustration of arrangement of a plurality of heating cables in the apparatus for melting of snow and/or ice from vehicles, in accordance with various embodiments of the present invention.
FIG. **4** is an exemplary illustration of a cross-section of the construction of the electric radiant heating cables and surrounding vehicle within which such heating element resides, in accordance with various embodiments of the present invention.
FIG. **5** is a block diagram of a hydronic heater, in accordance with various embodiments of the present invention.
FIG. **6** is an exemplary illustration of implementation of a hydronic heater based apparatus for melting of snow and/or ice from vehicles, in accordance with various embodiments of the present invention.
FIG. **7** is an exemplary illustration of a cross-section of the construction of the hydronic radiant heating tubes and surrounding vehicle within which such heating element resides, in accordance with various embodiments of the present invention.
FIG. **8** is flow chart of a method of melting of snow and/or ice from vehicle exteriors, according to yet another embodiment of the present invention.
FIG. **9** is an exemplary illustration of a top view of a truck bed assembly within which such heating elements reside, in accordance with various embodiments of the present invention.
FIG. **10** is an exemplary illustration of a sectional view of the truck bed assembly within which such heating elements reside, in accordance with various embodiments of the present invention.
FIG. **11** is an exemplary illustration of a top view of a truck bed assembly with separately assembled heating elements, in accordance with various embodiments of the present invention.
FIG. **12** is an exemplary illustration of a sectional view of the truck bed assembly with separately assembled heating elements, in accordance with various embodiments of the present invention.

### DETAILED DESCRIPTION

A description of embodiments of the present invention will now be given with reference to the Figures. It is expected that the present invention may be embodied in other specific forms without departing from the appended claims. The described embodiments are to be considered in all respects only as illustrative and not restrictive. The scope of the invention is, therefore, indicated by the appended claims rather than by the foregoing description. All changes that come within the meaning of the claims are to be embraced within their scope.

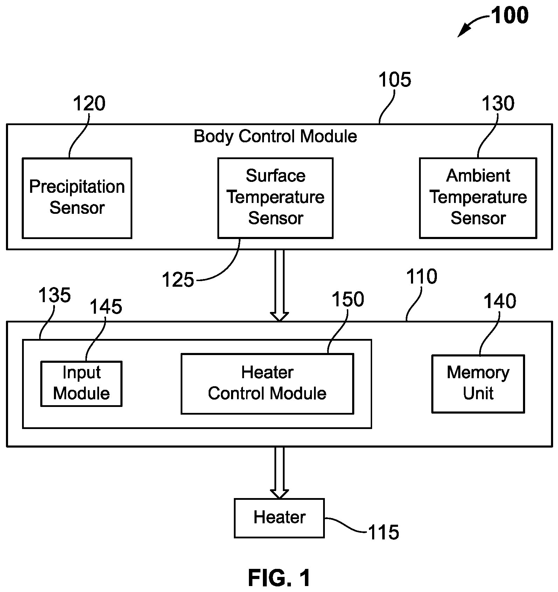

**FIGs. 1** through **12** illustrate a method and apparatus for a melting snow and/or ice, or preventing the build-up of such snow and/or ice, from the exterior of a vehicle by means of heating elements secured within the vehicle's exterior. It is to be understood, of course, that vehicles can include passenger vehicles (e.g., cars, trucks, vans, buses, minivans, Sports Utility Vehicles (SUV's), cross-over vehicles, electric vehicles (EVs), hybrid electric vehicles (HEVs), and aircrafts etc.), cargo vehicles (e.g., trucks, vans, box trucks, etc.), cargo trailers (i.e. semi-trailers), trains, or any other mode of transportation within which people or cargo can be transported and/or for which accumulation of snow and/or ice is a detriment to such transportation.

It is expected that the present invention may be embodied in other specific forms without departing from the appended claims. The described embodiments are to be considered in all respects only as illustrative and not restrictive. The scope of the invention is, therefore, indicated by the appended claims rather than by the foregoing description. All changes that come within the meaning of the claims are to be embraced within their scope. A description of embodiments of the present invention will now be given with reference to the Figures.

**FIG. 1** is a block diagram of an apparatus **100** for the melting of snow and/or ice from the exterior of vehicles in accordance with various embodiments of the invention. The apparatus **100** comprises a body control module **105,** a programmable controller **110,** and a heater **115.**

The body control module **105** is an integral component of the vehicle, and comprises a precipitation sensor **120,** a surface temperature sensor **125,** and an ambient temperature sensor **130.** In one example, the precipitation sensor **120** is an optical sensor. In another example, the precipitation sensor **120** is a TRW-Automotive model 7803 optical sensing system. In another example, the surface temperature sensor **125** is at least one of a thermistor and a thermocouple. In one example, the surface temperature **125** is a QTI model QT06024A sensor. In yet another example, the ambient temperature sensor **130** is a QTI model QT06005 sensor.

Further, the apparatus comprises a programmable controller **110.** The programmable controller **110** is configured to activate and deactivate the heater **115.** The programmable controller **110** comprises a memory unit **140** to store a cut off surface temperature Tc, and a set of program modules. The programmable controller **110** further comprises a processor **135** to execute the set of program modules. The set of program modules comprises an input module **145** and a heater control module **150.** The input module **145,** executed by the processor **135,** is configured to receive information regarding an ambient temperature Ta outside the vehicle via the ambient temperature sensor **130.** Further, the input module **145,** executed by the processor **135,** is configured to receive information regarding one of presence and absence of precipitation outside the vehicle, via the precipitation sensor **120.** Furthermore, the input module **145,** executed by the processor **135,** is configured to receive information regarding a surface temperature Ts on an exterior portion of the vehicle via the surface temperature sensor **125.** The heater control module **150,** executed by the processor, is configured to deactivate the heater **115** based on the surface temperature Ts being greater than the cut off surface temperature Tc. Further, the heater control module, executed by the processor, is configured to deactivate the heater based on certain safeties being triggered. Further, heater control module **150** is configured to activate the heater **115** based on the ambient temperature Ta being lower than freezing point of water and precipitation being present outside the vehicle, thereby melting snow and/or ice on the vehicle. The snow and/or ice on a vehicle melts because of heat generated by the heater **115** upon activation.

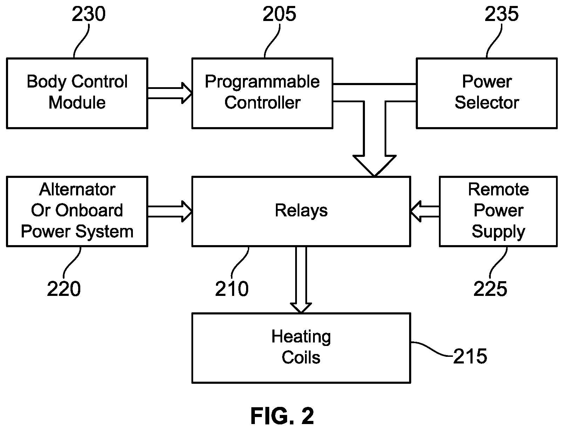

The heater **115** is at least one of an electric heater and a hydronic heater. The electric heater comprises a plurality of heating cables (not shown) disposed on an exterior portion of the vehicle, electrically coupled to an electric power source, but not limited to, an alternator or an onboard power system **220** (shown in FIG. **2****)** via a relay(s) **210** (shown in FIG. **2****).** The electric heater is configured to receive electric power from the electric power source, and heat the exterior portion of the vehicle, melting snow and/or ice on the vehicle. A block diagram of an electric heater is exemplarily illustrated in FIG. **2****.**

Referring now to **FIG. 2****,** a programmable controller **205** controls a plurality of relays **210** by sending control signals. The plurality of relays **210** connect a plurality of heating cables **215** with one of, but not limited to, an alternator or an onboard power system **220** in a vehicle, for example, an electric vehicle and a remote power source **225.** The remote power source **225** is at least one of an electric generator, and a domestic electric power supply. In one embodiment, the onboard power system **220** comprises a plurality of power sources include, but not limited to, onboard batteries and supercapacitors. In one embodiment, the onboard batteries are could be, but not limited to, lithium-ion (Li-ion) batteries, nickel-metal hydride Ni-MH batteries, nickel cadmium (Ni-Cd) batteries, nickel-iron batteries, and fuel cells. In an exemplary embodiment, electric vehicles (EVs) and hybrid electric vehicles (HEVs) use onboard power systems **220,** for example, onboard batteries, within safe temperature and voltage ranges in order to operate safely and efficiently. The electric vehicles (EVs) and hybrid electric vehicles (HEVs) include, but not limited to, road vehicles, rail vehicles, and aircrafts.

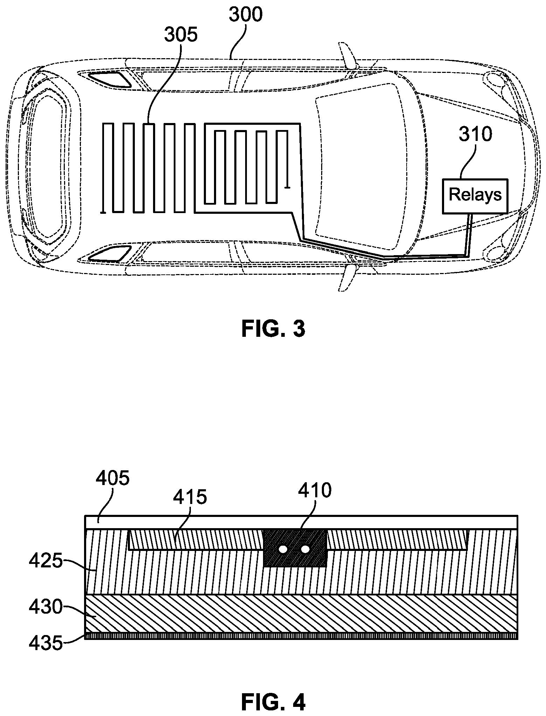

As mentioned earlier, the programmable controller **205** receives information regarding a surface temperature Ts, an ambient temperature Ta and precipitation from a body control module **230** in the vehicle. If the ambient temperature Ta is lower than 32 degree Fahrenheit (freezing point of water), and precipitation is present, then the programmable controller **205** instructs the plurality of relays **210** to route electrical power from any one of, but not limited to, the alternator or the onboard power system**220** and the remote power source **225** into the plurality of heating cables **215,** thereby activating the plurality of heating cables **215.** If the surface temperature Ts is greater than a cut off surface temperature Tc, then the programmable controller **205** instructs the plurality of relays **210** to disconnect the plurality of heating cables **215** from both of the alternator or the onboard power system **220** and the remote power source **225,** thereby deactivating the plurality of heating cables **215.** Further, when certain safeties are triggered the controller instructs the plurality of relays to disconnect the plurality of heating cables from, the alternator or the onboard power system **220,** and the remote power source(s) **225,** thereby deactivating the plurality of heating cables. In one example, a user is enabled to select any one of, but not limited to, the alternator or the onboard power system **220** and the remote power source **225** to supply electric power to the plurality of heating cables **215** via a power selector **235.** Depending on at least one input provided to the power selector **235** by the user, the plurality of relays **210** route electrical power from any one of, but not limited to, the alternator or the onboard power system **220** and the remote power source **225** into the plurality of heating cables **215.** An exemplary illustration of arrangement of the plurality of heating cables **215** in the vehicle is given in **FIG. 3****.**

Referring now to **FIG. 3****,** a plurality of heating cables **305** are arranged on roof of a car **300.** The plurality of heating cables **305** receives electric power from a plurality of relays **310** electrically coupled to an electric power source (not shown). An exemplary illustration of a heating cable among the plurality of heating cables **305,** disposed on exterior of the vehicle is shown in **FIG. 4****.**

Referring now to **FIG. 4****,** a heating cable **410** is secured directly below a roof **405** of a vehicle in a manner to maximize heat transfer between the heating cables **410** and the roof **405.** The heating cable **410** is secured in place with a thermally conductive fastening layer **415.** Further, the heating cable **410** is separated from other heating cables by a thermally conductive filler layer **425.** The thermally conductive fastening layer **410** comprises at least one of thermally conductive clips and/or wireways pre-formed with the roof **405,** thermally conductive clips and/or wireways (as noted above) affixed to the roof **405** by means welding or thermally conductive adhesives, and pre-wired, thermally conductive polymer (or other material) substrate assembly in which the heating cable **410** is embedded, said assembly then being secured to underside of the roof **405** by means of screws, bolts or clips with receivers formed in the roof **405.** Additionally, to control heat distribution towards exterior of the roof **405**), a layer of insulating material **430** is installed to cover a passenger compartment or cargo bay side of the vehicle. The layer of insulating material **430** minimizes heat transfer into the passenger compartment or the cargo bay

In one example, the heating cable **410** is sandwiched between underside of the roof **405** and an inner roof **435.** Voids between the roof **405** and the inner roof **435** are filled with the thermally conductive filler layer **425** to promote heat distribution. The layer of insulating material **430** is installed to cover the passenger or cargo bay side of the vehicle.

Referring back to **FIG. 3** and by way of further example, the plurality of heating cables **305** is connected to the plurality of relays **310** via a plurality of pillars (not referenced with numerals), which support the roof structure from the body of the vehicle. The plurality of pillars are utilized as pathways to route necessary wiring between the plurality of heating cables **305** and the plurality of relays **310.** For cargo vehicles, wiring between the plurality of heating cables **305** and the plurality of relays **310,** are routed in protective wireways mounted inside or outside the cargo vehicles.

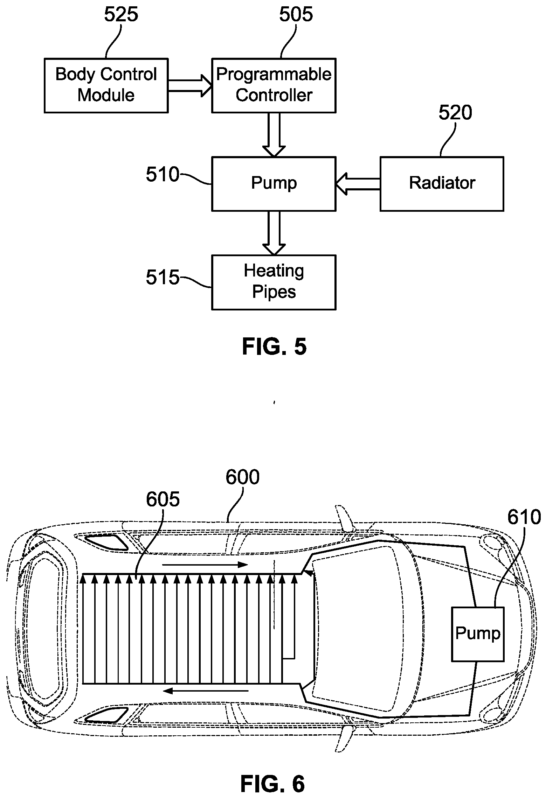

Referring back to **FIG. 1****,** in one example, the heater **115** is a hydronic heater. The hydronic heater comprises a plurality of heating pipes. A block diagram of a hydronic heater is exemplarily illustrated in **FIG. 5****.**

Referring now to **FIG. 5****,** a programmable controller **505** controls a pump **510** by sending control signals. The pump **510** connects a plurality of heating pipes **515** with a radiator **520** in a vehicle. The radiator **520** contains heated engine coolant. As mentioned earlier, the programmable controller **505** receives information regarding a surface temperature Ts, an ambient temperature Ta and precipitation from a body control module **525** in the vehicle. If the ambient temperature Ta is lower than 32 degree Fahrenheit (freezing point of water), and precipitation is present, then the programmable controller **505** instructs the pump **510** to pump one of the heated water and heated coolant liquid from the radiator **520** into the plurality of heating pipes **515,** thereby heating the plurality of heating pipes **515.** If the surface temperature Ts is greater than a cut off surface temperature Tc, then the programmable controller **505** instructs the pump **510** to stop pumping one of the heated water and the heated coolant liquid into the plurality of heating pipes **515** from the radiator **520.** The pump **510** and the plurality of heating pipes **515** form the hydronic heater. The hydronic heater is configured to receive heated engine coolant from the radiator or engine block jacket, and circulate the heated engine coolant, thereby transferring heat to the exterior portion of the vehicle. An exemplary illustration of arrangement of the plurality of heating pipes **515** in the vehicle is given in **FIG. 6****.**

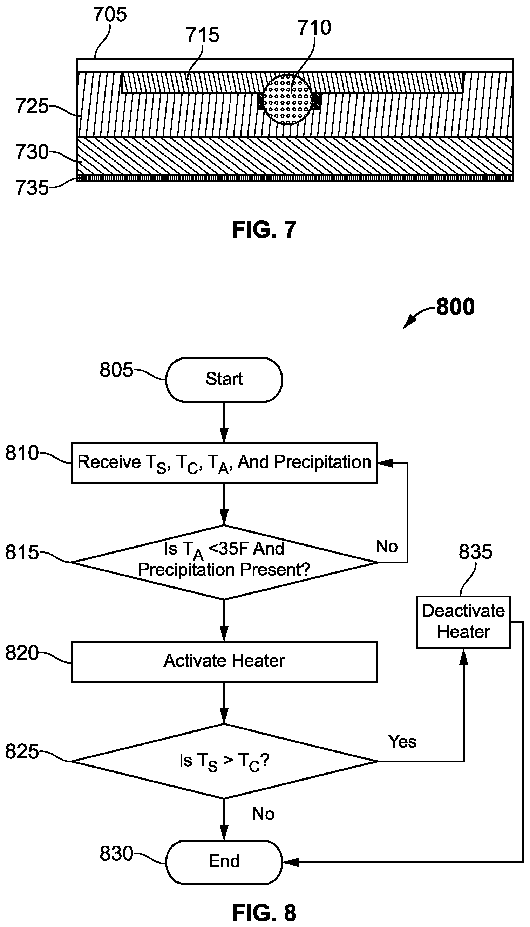

Referring now to **FIG. 6****,** a plurality of heating pipes **605** are arranged on roof of a car **600.** The plurality of heating pipes **605** receives heated water or heated coolant liquid from a pump **610.** An exemplary illustration of a heating pipe among the plurality of heating pipes **605,** disposed on exterior of the vehicle is shown in **FIG. 7****.**

Referring now to **FIG. 7****,** a heating pipe **710** is secured directly below a roof **705** of a vehicle in a manner to maximize heat transfer between the heating pipes **710** and the roof **705.** The heating pipe **710 is** secured in place with a thermally conductive fastening layer **715.** Further, the heating pipe 710 is separated from other heating pipes by a thermally conductive filler layer **725.** The thermally conductive fastening layer **710** comprises of thermally conductive clips pre-formed with the roof **705,** thermally conductive clips (as noted above) affixed to the roof **705** by means of welding or thermally conductive adhesives, thermally conductive polymer (or other material) substrate assembly in which the heating pipe **710** is embedded, said assembly then being secured to underside of the roof **705** by means of screws, bolts or clips with receivers formed in the roof **705.** Additionally, to control heat distribution towards exterior of the roof **705**), a layer of insulating material **730** is installed to cover a passenger compartment or cargo bay side of the vehicle. The layer of insulating material **730** minimizes heat transfer into the passenger compartment or the cargo bay.

In one example, the heating pipe **710** is sandwiched between underside of the roof **705** and an inner roof **735.** Voids between the roof **705** and the inner roof **735** are filled with the thermally conductive filler layer **725** to promote heat distribution. The layer of insulating material **730** is installed to cover the passenger or cargo bay side of the vehicle.

Referring back to **FIG. 6** and by way of further example, the plurality of heating pipes **605** is connected to the pump **610** via a plurality of pillars (not referenced with numerals), which support the roof structure from the body of the vehicle. The plurality of pillars are utilized as pathways to route necessary pipework between the plurality of heating pipes **605** and the pump **610.** For cargo vehicles, piping between the plurality of heating pipes **605** and the pump **610,** are routed in protective raceways mounted inside or outside the cargo vehicles.

**FIG. 8** is a flowchart of a method **800** for melting of snow and/or ice from vehicle exteriors, in accordance with various embodiments of the invention. The method **800** begins at step **805.**

At step **810,** the input module, executed by the processor, receives information regarding an ambient temperature Ta outside the vehicle via the ambient temperature sensor, information regarding one of presence and absence of precipitation outside the vehicle, via the precipitation sensor and information regarding a surface temperature Ts on an exterior portion of the vehicle via the surface temperature sensor.

At step **810,** the processor compares the ambient temperature Ta with freezing point of water. Further, the processor checks if the precipitation is present. If the ambient temperature Ta is at or lower than the freezing point of water, and if precipitation is present, then the processor executes step **820.** Otherwise, the processor executes step **810** again.

At step **820,** the heater control module activates the heater thereby melting snow and/or ice on the vehicle.

At step **825,** the processor checks if the surface temperature Ts is greater than the cut off surface temperature Tc. If the surface temperature Ts is greater than the cut off surface temperature Tc, then the processor executes step **835.** Otherwise, the processor executes step **830.**

At step **835,** the heater control module, executed by the processor, deactivates the heater based on the surface temperature Ts being greater than the cut off surface temperature Tc.

The method **800** ends at step **830.** It is to be understood that the cycle of method steps as shown in **FIG. 8** can be repeated based on a clock timer, pre-set time intervals or at the instructions of the processor.

As stated above, examples of the vehicles include, but is not limited to: cars, trucks, vans, buses, minivans, Sports Utility Vehicles (SUV's), cross-over vehicles, trailer trucks, electric vehicles (EVs), hybrid electric vehicles (HEVs). The method **800** is implemented in an apparatus for melting of snow. The apparatus comprises a body control module, a programmable controller, and a heater. The body control module is an integral component of the vehicle, and comprises a precipitation sensor, a surface temperature sensor, and an ambient temperature sensor. In one example, the precipitation sensor is an optical sensor. In another example, the precipitation sensor is a TRW-Automotive model 7803 optical sensing system. In another example, the surface temperature sensor is at least one of a thermistor, and a thermocouple. In one example, the surface temperature is a QTI model QT06024A sensor. In yet another example, the ambient temperature sensor is a QTI model QT06005 sensor. Further, the apparatus comprises a programmable controller. The programmable controller is configured to activate and deactivate the heater. The programmable controller comprises a memory unit to store a cut off surface temperature Tc, and a set of program modules. The programmable controller further comprises a processor to execute the set of program modules. The set of program modules comprises an input module and a heater control module.

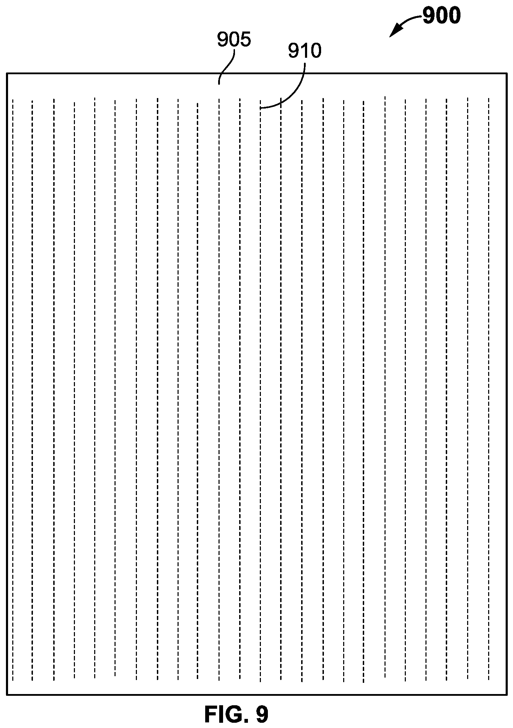

Referring now to **FIG. 9****,** a top view of a truck bed **900** is shown in accordance with various embodiments of the present invention. The truck bed **900** comprises a truck bed liner **905** secured within and/or constructed as part of the truck bed **900** either as an OEM build or after-market build. The truck bed liner **905** may be molded as a single-piece or several pieces. Additionally, the truck bed liner **905** may include multi-layers or a polymer layer. The polymer layer may be a polyethylene and/or polypropylene layer. The truck bed **900** further comprises a plurality of heating elements **910** (as embodied and/or described above) that are secured within and/or constructed as part of the truck bed liner **905.**

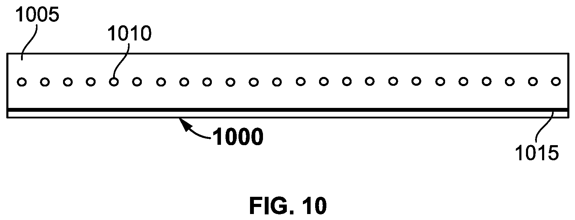

Referring now to **FIG. 10****,** a section view of a truck bed **1000** is shown in accordance with various embodiments of the present invention. The truck bed **1000** comprises a truck bed liner **1005** embedded with a plurality of heating elements 1010. The heating elements **1010** are embedded within (and/or underneath an exterior of) the truck bed liner 1005. The truck bed liner **1005** may provide a protective layer (or under-loop system) for the heating elements **1010.**

The heating elements **1010** are pliable/flexible and are arranged within the truck bed liner to withstand in the environmental challenges and/or to avoid damages due to heavy cargo loads. The heating elements are cast in the bed liner material sheets prior to the molding or shaping of the bed liner material sheets, or may be cast into the molds or formed as part of the molds using a molding process.

Further, the truck bed liner **1005** interlocks and protects the heating elements all around. The truck bed liner **1005** can itself act as a thermally conductive layer. The truck bed **1000** further comprises an insulating material **1015.** The insulating material **1015** is provided between the truck bed **1000** and the truck bed liner **1005.**

Further, the heating elements **1010** has one or more terminals. The terminals of the heating elements **1010** are connected to an electric power source (as embodied and/or described above), thereby heating the plurality of heating elements **1010.** The heat generated by the heating elements **1010** transfers the heat to the exterior portion of the truck liner and/or vehicle via the thermally conductive layer/truck bed liner **1005,** thereby melting the snow from the exterior portion of the vehicle. The heat density required of the heating elements **1010** and truck bed liner **1005** with respect to sufficient thermal conductivity is a function of the rate of snow fall and the temperature outside, and therefore can be further dependent on the geographic area in which the invention is to be utilized, but in a preferred embodiment is preferably 55 watts per square foot.

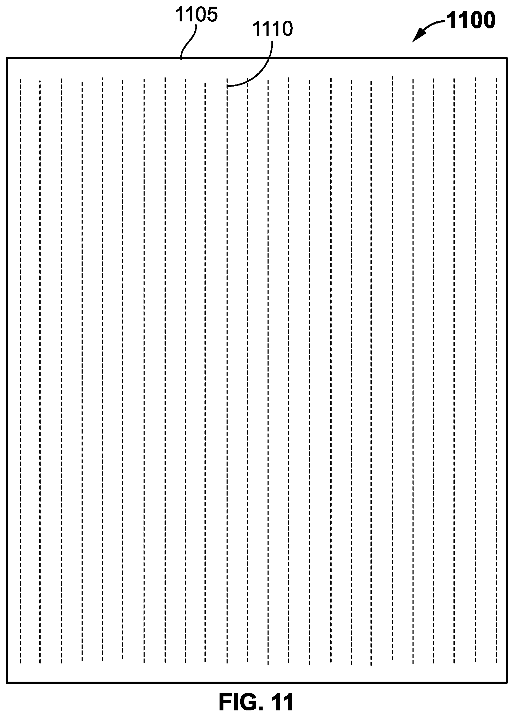

Referring now to **FIG. 11****,** a top view of a truck bed assembly **1100** is shown in accordance with various embodiments of the present invention. The truck bed assembly **1100** further comprises a truck bed liner **1105** secured within and/or constructed as part of the truck bed assembly **1100** either as an OEM build or after-market build. The truck bed liner **1105** may include multi-layers or a polymer layer. The polymer layer may be a polyethylene and/or polypropylene layer. Additionally, the truck bed liner **1105** may be molded as a single-piece or several pieces. The truck bed assembly **1100** further comprises a plurality of heating elements **1110** (as embodied and/or described above) that are securely assembled underneath the truck bed liner **1105** or above the vehicle's exterior.

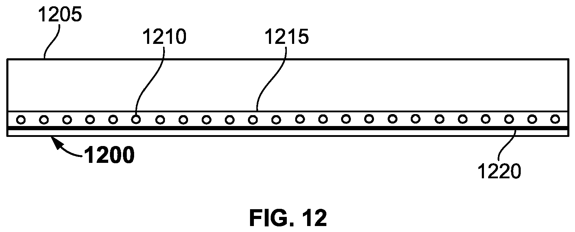

Referring now to **FIG. 12****,** a section view of the truck bed assembly **1200** is shown in accordance with various embodiments of the present invention. The truck bed assembly **1200** comprises a truck bed liner **1205** assembled with a plurality of heating elements **1210.** The truck bed assembly **1200** further comprises a separate assembly **1215** for the heating elements **1210.**

The heating elements **1210** are assembled in the separate assembly **1215** below the truck bed liner **1205.** The heating elements **1210** are pliable/flexible and are arranged underneath the truck bed liner to withstand in the environmental challenges and/or to avoid damages due to heavy cargo loads. The heating elements are cast in the bed liner material sheets prior to the molding or shaping of the bed liner material sheets, or may be cast into the molds or formed as part of the molds using a molding process.

Further, the truck bed liner **1205** acts as a thermally conductive layer. The truck bed assembly **1200** further comprises an insulating material **1220.** The insulating material **1220** is provided between the truck bed assembly **1200** and the separate assembly **1215** of the heating elements **1210.**

Further, the heating elements **1210** has one or more terminals. The terminals of the heating elements **1210** are connected to an electric power source (as embodied and/or described above), thereby heating the plurality of heating elements **1210.** The heat generated by the heating elements **1210** transfers via the thermally conductive layer/truck bed liner **1205** to heat the exterior portion of the vehicle, thereby melting the snow from the exterior portion of the vehicle. The heat density required of the heating elements **1210** and truck bed liner **1205** with respect to sufficient thermal conductivity is a function of the rate of snow fall and the temperature outside, and therefore can be further dependent on the geographic area in which the invention is to be utilized, but in a preferred embodiment is preferably 55 watts per square foot.

Accordingly, with respect to the construction variants, the heating elements can be molded into and/or embedded within the bed liner OEM and positioned strategically. Alternatively, the heating elements can be installed in a separate assembly below and/or embedded into the bed liner after-market construction and positioned strategically. The truck beds can be those in trucks or rail-cars, for instance: pick-up truck beds, flat truck beds, semi-trailer truck beds and/or any other type of open-cargo truck bed and/or rail-car bed.

The foregoing description comprises illustrative embodiments of the present invention. Having thus described exemplary embodiments of the present invention, it should be noted by those skilled in the art that the within disclosures are exemplary only, and that various other alternatives, adaptations, and modifications may be made within the scope of the present invention. Merely listing or numbering the steps of a method in a certain order does not constitute any limitation on the order of the steps of that method. Many modifications and other embodiments of the invention will come to mind to one skilled in the art to which this invention pertains having the benefit of the teachings presented in the foregoing descriptions. Although specific terms may be employed herein, they are used only in generic and descriptive sense and not for purposes of limitation. Accordingly, the present invention is not limited to the specific embodiments illustrated herein.

## Claims

1. An apparatus for melting snow from an exterior-facing portion of a truck bed liner (1005) positioned within a truck bed (1000) of a vehicle,
the apparatus comprising:
a plurality of heating elements (1010) embedded within the truck bed liner (1005) and a programmable controller (110) (205) (505),
wherein the plurality of heating elements (1010) are electrically coupled to at least one of an onboard power system (220) and a remote electric power source (225) via a relay;
the plurality of heating elements (1010) are cast in a bed liner material prior to a molding or shaping of bed liner material sheets or are cast into molds or formed as part of molds using a molding process; and,
the apparatus further comprises:
a precipitation sensor (120);
a surface temperature sensor (125);
an ambient temperature sensor (130); and
an insulating material (1015) positioned between the truck bed (1000) and the truck bed liner (1005) to minimize heat transfer to the truck bed (1000),
wherein the programmable controller (110) (205) (505) is configured to activate and deactivate the plurality of heating elements (1010),
the programmable controller (110) (205) (505) comprising:
a memory unit (140) to store a cut off surface temperature, and a set of program modules, and
a processor (135) to execute the set of program modules, wherein the set of program modules comprises:
an input module (145), executed by the processor (135), configured to:
receive information regarding one of presence and absence of precipitation outside the vehicle, via the precipitation sensor (120), and,
receive information regarding a surface temperature on an exterior portion of the vehicle via the surface temperature sensor (125), and,
receive information regarding an ambient temperature outside the vehicle via the ambient temperature sensor (130); and,
a heater control module (150), executed by the processor (135), configured to:
deactivate the plurality of heating elements (1010) based on the surface temperature being greater than the cut off surface temperature, and,
activate the plurality of heating elements (1010) based on the ambient temperature being lower than a freezing point of water, and precipitation outside the vehicle being present, thereby melting snow and/or ice on the exterior-facing portion of the truck bed liner (1005).

2. An apparatus for melting snow from an exterior-facing portion of a truck bed liner (1205) positioned within a truck bed (1200) of a vehicle,
the apparatus comprising:
a plurality of heating elements (1210) assembled in a separate assembly and positioned below the truck bed liner (1205), and a programmable controller (110) (205) (505),
wherein
the plurality of heating elements (1210) are electrically coupled to at least one of an onboard power system (220) and
a remote electric power source (225) via a relay;
the plurality of heating elements (1210) are cast into molds or formed as part of molds using a molding process; and,
the apparatus further comprises:
a precipitation sensor (120);
a surface temperature sensor (125);
an ambient temperature sensor (130); and
an insulating material (1220) provided between the truck bed assembly and the separate assembly (1215) of the heating elements (1210),
wherein the programmable controller (110) (205) (505) is configured to activate and deactivate the plurality of heating elements (1210),
the programmable controller (110) (205) (505) comprising:
a memory unit (140) to store a cut off surface temperature, and a set of program modules, and
a processor (135) to execute the set of program modules, wherein the set of program modules comprises:
an input module (145), executed by the processor (135), configured to:
receive information regarding one of presence and absence of precipitation outside the vehicle, via the precipitation sensor (120), and,
receive information regarding a surface temperature on an exterior portion of the vehicle via the surface temperature sensor (125), and,
receive information regarding an ambient temperature outside the vehicle via the ambient temperature sensor (130); and,
a heater control module (150), executed by the processor (135), configured to:
deactivate the plurality of heating elements (1210) based on the surface temperature being greater than the cut off surface temperature, and,
activate the plurality of heating elements (1210) based on the ambient temperature being lower than a freezing point of water, and precipitation outside the vehicle being present, thereby melting snow and/or ice on the exterior-facing portion of the truck bed liner (1205).

3. The apparatus of claim 1 or 2, wherein the plurality of heating elements (10 10) (1210) when activated conductively transfer heat to the exterior-facing portion of the truck bed liner (1005) (1205).

4. The apparatus of claim 1 or 2 wherein the onboard power system (220) includes at least one of onboard batteries and supercapacitors.

5. The apparatus of claim 1 or 2, wherein the truck bed (1000) (1200) is at least one of a pick-up truck bed, a flat truck bed, a semi-trailer truck bed, an open-cargo truck bed and a rail-car bed.

6. A method of melting snow from an exterior-facing portion of a truck bed liner (1005) positioned within a truck bed (1000) of a vehicle,
**characterized in that**
the method comprises:
storing in a memory unit (140), a cut off surface temperature, and a set of program modules;
receiving, by a processor (135) executing the input module (145),
information regarding one of presence and absence of precipitation outside the vehicle, from a precipitation sensor (120);
receiving, by the processor (135) executing the input module (145),
information regarding a surface temperature on an exterior portion of the vehicle, from the surface temperature sensor (125);
receiving, by the processor (135) executing an input module (145),
information regarding an ambient temperature outside the vehicle, from an ambient temperature sensor (130);
deactivating, by the processor (135) executing a heater control module (150), a plurality of heating elements (1010) based on the surface temperature being greater than the cut off surface temperature, wherein the plurality of heating elements (1010) is embedded within the truck bed liner (1005) and is electrically coupled to at least one of an onboard power system (220) and a remote electric power source (225) via a relay; and
activating the plurality of heating elements (1010) embedded within the truck bed liner (1005), by the processor (135) executing the heater control module (150), based on:
the ambient temperature being lower than a freezing point of water, and
precipitation outside the vehicle being present, thereby melting the snow from the exterior-facing portion of the truck bed liner (1005), wherein an insulating material (1015) is positioned between the truck bed (1000) and the truck bed liner (1005) to minimize heat transfer to the truck bed (1000) and
the plurality of heating elements (1010) are cast in a bed liner material prior to a molding or shaping of bed liner material sheets or are cast into molds or formed as part of molds using a molding process.

7. A method of melting snow from an exterior-facing portion of a truck bed liner (1205) positioned within a truck bed (1200) of a vehicle,
**characterized in that**
the method comprises:
storing in a memory unit (140), a cut off surface temperature, and a set of program modules;
receiving, by a processor (135) executing the input module (145),
information regarding one of presence and absence of precipitation outside the vehicle, from a precipitation sensor (120);
receiving, by the processor (135) executing the input module (145),
information regarding a surface temperature on an exterior portion of the vehicle, from the surface temperature sensor (125);
receiving, by the processor (135) executing an input module (145),
information regarding an ambient temperature outside the vehicle, from an ambient temperature sensor (130);
deactivating, by the processor (135) executing a heater control module (150), a plurality of heating elements (1210) based on the surface temperature being greater than the cut off surface temperature,
wherein the plurality of heating elements (1210) is assembled in a separate assembly, positioned below the truck bed liner (1205) and is electrically coupled to at least one of an onboard power system (220) and a remote electric power source (225) via a relay; and
activating the plurality of heating elements (1210),
by the processor (135) executing the heater control module (150), based on:
the ambient temperature being lower than a freezing point of water, and
precipitation outside the vehicle being present, thereby melting the snow from the exterior-facing portion of the truck bed liner (1205),
wherein an insulating material (1220) is provided between the truck bed assembly and the separate assembly (1215) of the heating elements (1210) and
the plurality of heating elements (1210) are cast into molds or formed as part of molds using a molding process.

8. The method of claim 6 or 7, wherein the truck bed (1000) (1200) is at least one of a pick-up truck bed, a flat truck bed, a semi-trailer truck bed, an open-cargo truck bed and a rail-car bed.

9. The method of claim 6 or 7, wherein the plurality of heating elements (1010) (1210) when activated conductively transfer heat to the exterior-facing portion of the truck bed liner (1005) (1205).

10. The method of claim 6 or 7, wherein the onboard power system (220) includes at least one of onboard batteries and supercapacitors.

## Patentansprüche

1. Vorrichtung zum Schmelzen von Schnee von einem nach außen gerichteten Abschnitt einer innerhalb einer LKW-Ladefläche (1000) eines Fahrzeugs positionierten LKW-Ladeflächenauskleidung (1005),
wobei die Vorrichtung Folgendes umfasst:
eine Vielzahl von in die LKW-Ladeflächenauskleidung (1005) eingebetteten Heizelemente (1010) und
eine programmierbare Steuerung (110) (205) (505), wobei die Vielzahl von Heizelementen (1010) elektrisch mit mindestens einem von einem Bordstromsystem (220) und
einer entfernten elektrischen Stromquelle (225) über ein Relais verbunden ist;
die Vielzahl von Heizelementen (1010) vor dem Formen oder Gestalten von LKW-Ladeflächenauskleidungsmaterialplatten in ein LKW-Ladeflächenauskleidungsmaterial gegossen wird oder in Formen gegossen oder als Teil von Formen unter Verwendung eines Formverfahrens geformt wird; und
wobei die Vorrichtung ferner Folgendes umfasst:
einen Niederschlagssensor (120);
einen Oberflächentemperatursensor (125);
einen Umgebungstemperatursensor (130); und
ein zwischen der LKW-Ladefläche (1000) und der LKW-Ladeflächenauskleidung (1005) positioniertes Isoliermaterial (1015), um die Wärmeübertragung auf die LKW-Ladefläche (1000) zu minimieren,
wobei die programmierbare Steuerung (110) (205) (505) konfiguriert ist, um die Vielzahl von Heizelementen (1010) zu aktivieren und zu deaktivieren, wobei die programmierbare Steuerung (110) (205) (505) Folgendes umfasst:
eine Speichereinheit (140) zur Speicherung einer Oberflächen-Grenztemperatur und eines Satzes von Programmmodulen, und
einen Prozessor (135) zur Ausführung der Programmmodule, wobei die Programmmodule Folgendes umfassen:
ein von dem Prozessor (135) ausgeführtes Eingabemodul (145), das zu Folgendem konfiguriert ist:
Empfangen von Informationen über das Vorhandensein oder Fehlen von Niederschlag außerhalb des Fahrzeugs über den Niederschlagssensor (120), und
Empfangen von Informationen über die Oberflächentemperatur eines äußeren Teils des Fahrzeugs über den Oberflächentemperatursensor (125), und
Empfangen von Informationen über die Umgebungstemperatur außerhalb des Fahrzeugs über den Umgebungstemperatursensor (130); und
ein von dem Prozessor (135) ausgeführtes Heizmodul (150), das zu Folgendem konfiguriert ist:
Deaktivieren der Vielzahl von Heizelementen (1010) basierend auf der Oberflächentemperatur, die größer als die Oberflächen-Grenztemperatur ist, und
Aktivieren der Vielzahl von Heizelementen (1010) basierend auf der Umgebungstemperatur, die unter dem Gefrierpunkt von Wasser liegt, und Niederschlag, der außerhalb des Fahrzeugs vorhanden ist, wodurch Schnee und/oder Eis auf dem nach außen gerichteten Abschnitt der LKW-Ladeflächenauskleidung (1005) geschmolzen wird.

2. Vorrichtung zum Schmelzen von Schnee von einem nach außen gerichteten Abschnitt einer innerhalb einer LKW-Ladefläche (1200) eines Fahrzeugs positionierten LKW-Ladeflächenauskleidung (1205),
wobei die Vorrichtung Folgendes umfasst:
eine Vielzahl von in einer separaten Baugruppe angeordneten und unterhalb der LKW-Ladeflächenauskleidung (1205) positionierten Heizelementen (1210) und
eine programmierbare Steuerung (110) (205) (505), wobei
die Vielzahl von Heizelementen (1210) elektrisch mit mindestens einem von einem Bordstromsystem (220) und
einer entfernten elektrischen Stromquelle (225) über ein Relais verbunden ist;
die Vielzahl von Heizelementen (1210) in Formen gegossen wird oder als Teil von Formen unter Verwendung eines Formverfahrens geformt wird; und
wobei die Vorrichtung ferner Folgendes umfasst:
einen Niederschlagssensor (120);
einen Oberflächentemperatursensor (125);
einen Umgebungstemperatursensor (130); und
ein zwischen der LKW-Ladeflächenbaugruppe und der separaten Baugruppe (1215) der Heizelemente (1210) bereitgestelltes Isoliermaterial (1220),
wobei die programmierbare Steuerung (110) (205) (505) konfiguriert ist, um die Vielzahl von Heizelementen (1210) zu aktivieren und zu deaktivieren,
wobei die programmierbare Steuerung (110) (205) (505) Folgendes umfasst:
eine Speichereinheit (140) zur Speicherung einer Oberflächen-Grenztemperatur und eines Satzes von Programmmodulen, und
einen Prozessor (135) zur Ausführung der Programmmodule, wobei die Programmmodule Folgendes umfassen:
ein von dem Prozessor (135) ausgeführtes Eingabemodul (145), das zu Folgendem konfiguriert ist:
Empfangen von Informationen über das Vorhandensein oder Fehlen von Niederschlag außerhalb des Fahrzeugs über den Niederschlagssensor (120), und
Empfangen von Informationen über die Oberflächentemperatur eines äußeren Teils des Fahrzeugs über den Oberflächentemperatursensor (125), und
Empfangen von Informationen über die Umgebungstemperatur außerhalb des Fahrzeugs über den Umgebungstemperatursensor (130); und
ein von dem Prozessor (135) ausgeführtes Heizmodul (150), das zu Folgendem konfiguriert ist:
Deaktivieren der Vielzahl von Heizelementen (1210) basierend auf der Oberflächentemperatur, die größer als die Oberflächen-Grenztemperatur ist, und
Aktivieren der Vielzahl von Heizelementen (1210) basierend auf der Umgebungstemperatur, die unter dem Gefrierpunkt von Wasser liegt, und Niederschlag, der außerhalb des Fahrzeugs vorhanden ist, wodurch Schnee und/oder Eis auf dem nach außen gerichteten Abschnitt der LKW-Ladeflächenauskleidung (1205) geschmolzen wird.

3. Vorrichtung nach Anspruch 1 oder 2, wobei die Vielzahl der Heizelemente (1010) (1210) bei Aktivierung Wärme leitend an den nach außen gerichteten Abschnitt der LKW-Ladeflächenauskleidung (1005) (1205) übertragen.

4. Vorrichtung nach Anspruch 1 oder 2, wobei das Bordstromsystem (220) mindestens eines von Bordbatterien und Superkondensatoren beinhaltet.

5. Vorrichtung nach Anspruch 1 oder 2, wobei die LKW-Ladefläche (1000) (1200) mindestens eine von einer Pick-up-LKW-Ladefläche, einer flachen LKW-Ladefläche, einer Sattelschlepper-LKW-Ladefläche, einer LKW-Ladefläche für offene Fracht oder einer Schienenwagen-Ladefläche ist.

6. Verfahren zum Schmelzen von Schnee von einem nach außen gerichteten Abschnitt einer innerhalb einer LKW-Ladefläche (1000) eines Fahrzeugs positionierten LKW-Ladeflächenauskleidung (1005),
**dadurch gekennzeichnet, dass**
das Verfahren Folgendes umfasst:
Speichern einer Oberflächen-Grenztemperatur und eines Satzes von Programmmodulen in einer Speichereinheit (140);
Empfangen von Informationen über das Vorhandensein oder Fehlen von Niederschlag außerhalb des Fahrzeugs von einem Niederschlagssensor (120) durch einen Prozessor (135), der das Eingabemodul (145) ausführt;
Empfangen von Informationen über eine Oberflächentemperatur an einem äußeren Abschnitt des Fahrzeugs von dem Oberflächentemperatursensor (125) durch den Prozessor (135), der das Eingabemodul (145) ausführt;
Empfangen von Informationen über eine Umgebungstemperatur außerhalb des Fahrzeugs von einem Umgebungstemperatursensor (130) durch den Prozessor (135), der ein Eingabemodul (145) ausführt;
Deaktivieren einer Vielzahl von Heizelementen (1010) basierend auf der Oberflächentemperatur, die größer als die Oberflächen-Grenztemperatur ist, durch den Prozessor (135), der ein Heizsteuerungsmodul (150) ausführt, wobei die Vielzahl von Heizelementen (1010) in die LKW-Ladefläche (1005) eingebettet ist und über ein Relais mit mindestens einem von einem Bordstromsystem (220) und einer entfernten elektrischen Stromquelle (225) elektrisch verbunden ist; und
Aktivieren der Vielzahl von Heizelementen (1010), die in die LKW-Ladefläche (1005) eingebettet sind, durch den Prozessor (135), der das Heizsteuerungsmodul (150) ausführt, basierend darauf, dass:
die Umgebungstemperatur niedriger als der Gefrierpunkt von Wasser ist und
Niederschlag außerhalb des Fahrzeugs vorhanden ist, wodurch der Schnee von dem nach außen gerichteten Abschnitt der LKW-Ladeflächenauskleidung (1005) schmilzt, wobei ein Isoliermaterial (1015) zwischen der LKW-Ladefläche (1000) und der Ladeflächenauskleidung (1005) positioniert ist, um die Wärmeübertragung auf die LKW-Ladefläche (1000) zu minimieren, und
die Vielzahl von Heizelementen (1010) vor dem Formen oder Gestalten von LKW-Ladeflächenauskleidungsmaterialplatten in ein LKW-Ladeflächenauskleidungsmaterial gegossen wird oder in Formen gegossen oder als Teil von Formen unter Verwendung eines Formverfahrens geformt wird.

7. Verfahren zum Schmelzen von Schnee von einem nach außen gerichteten Abschnitt einer innerhalb einer LKW-Ladefläche (1200) eines Fahrzeugs positionierten LKW-Ladeflächenauskleidung (1205),
**dadurch gekennzeichnet, dass**
das Verfahren Folgendes umfasst:
Speichern einer Oberflächen-Grenztemperatur und eines Satzes von Programmmodulen in einer Speichereinheit (140);
Empfangen von Informationen über das Vorhandensein oder Fehlen von Niederschlag außerhalb des Fahrzeugs von einem Niederschlagssensor (120) durch einen Prozessor (135), der das Eingabemodul (145) ausführt;
Empfangen von Informationen über eine Oberflächentemperatur an einem äußeren Abschnitt des Fahrzeugs von dem Oberflächentemperatursensor (125) durch den Prozessor (135), der das Eingabemodul (145) ausführt;
Empfangen von Informationen über eine Umgebungstemperatur außerhalb des Fahrzeugs von einem Umgebungstemperatursensor (130) durch den Prozessor (135), der ein Eingabemodul (145) ausführt;
Deaktivieren der Vielzahl von Heizelementen (1210) basierend auf der Oberflächentemperatur, die größer als die Oberflächen-Grenztemperatur ist, durch den Prozessor (135), der ein Heizsteuerungsmodul (150) ausführt,
wobei die Vielzahl von Heizelementen (1210) in einer separaten Baugruppe angeordnet ist, unterhalb der Ladeflächenauskleidung (1205) positioniert und über ein Relais elektrisch mit mindestens einem Bordstromsystem (220) und/oder einer externen Stromquelle (225) verbunden ist; und
Aktivieren der Vielzahl von Heizelementen (1210) durch den Prozessor (135), der das Heizsteuerungsmodul (150) ausführt, basierend darauf, dass:
die Umgebungstemperatur niedriger als der Gefrierpunkt von Wasser ist und
Niederschlag außerhalb des Fahrzeugs vorhanden ist, wodurch der Schnee von dem nach außen gerichteten Abschnitt der LKW-Ladeflächenauskleidung (1205) schmilzt, wobei ein Isoliermaterial (1220) zwischen der LKW-Ladeflächenbaugruppe und der separaten Baugruppe (1215) der Heizelemente (1210) bereitgestellt ist und
die Vielzahl von Heizelementen (1210) in Formen gegossen wird oder als Teil von Formen unter Verwendung eines Formverfahrens geformt wird.

8. Verfahren nach Anspruch 6 oder 7, wobei die LKW-Ladefläche (1000) (1200) mindestens eine von einer Pick-up-LKW-Ladefläche, einer flachen LKW-Ladefläche, einer Sattelschlepper-LKW-Ladefläche, einer LKW-Ladefläche für offene Fracht oder einer Schienenwagen-Ladefläche ist.

9. Verfahren nach Anspruch 6 oder 7, wobei die Vielzahl der Heizelemente (1010) (1210) bei Aktivierung Wärme leitend an den nach außen gerichteten Abschnitt der LKW-Ladeflächenauskleidung (1005) (1205) übertragen.

10. Verfahren nach Anspruch 6 oder 7, wobei das Bordstromsystem (220) mindestens eines von Bordbatterien und Superkondensatoren beinhaltet.

## Revendications

1. Appareil destiné à faire fondre la neige d'une partie orientée vers l'extérieur d'une doublure de caisse de camion (1005) positionnée à l'intérieur d'une caisse de camion (1000) d'un véhicule,
l'appareil comprenant :
une pluralité d'éléments chauffants (1010) intégrés à l'intérieur de la doublure de caisse de camion (1005) et
un dispositif de commande programmable (110) (205) (505), dans lequel
la pluralité d'éléments chauffants (1010) sont couplés électriquement à au moins l'un d'un système d'alimentation embarqué (220) et
d'une source d'alimentation électrique à distance (225) par l'intermédiaire d'un relais ;
la pluralité d'éléments chauffants (1010) sont moulés dans un matériau de doublure de caisse avant le moulage ou le formage de feuilles de matériau de doublure de caisse ou sont moulés dans des moules ou formés en tant que partie de moules à l'aide d'un procédé de moulage ; et,
l'appareil comprend en outre :
un capteur de précipitations (120) ;
un capteur de température de surface (125) ;
un capteur de température ambiante (130) ; et
un matériau isolant (1015) positionné entre la caisse de camion (1000) et la doublure de caisse de camion (1005) pour minimiser le transfert de chaleur vers la caisse de camion (1000),
dans lequel le dispositif de commande programmable (110) (205) (505) est configuré pour activer et désactiver la pluralité d'éléments chauffants (1010), le dispositif de commande programmable (110) (205) (505) comprenant :
une unité de mémoire (140) pour stocker une température de surface limite, et un ensemble de modules de programme, et
un processeur (135) pour exécuter l'ensemble de modules de programme, dans lequel l'ensemble de modules de programme comprend :
un module d'entrée (145), exécuté par le processeur (135), configuré pour :
recevoir des informations concernant l'une de la présence et de l'absence de précipitations à l'extérieur du véhicule, par l'intermédiaire du capteur de précipitations (120), et,
recevoir des informations concernant une température de surface sur une partie externe du véhicule par l'intermédiaire du capteur de température de surface (125), et,
recevoir des informations concernant une température ambiante à l'extérieur du véhicule par l'intermédiaire du capteur de température ambiante (130) ; et,
un module de commande de réchauffeur (150), exécuté par le processeur (135), configuré pour :
désactiver la pluralité d'éléments chauffants (1010) sur la base de la température de surface qui est supérieure à la température de surface limite, et,
activer la pluralité d'éléments chauffants (1010) sur la base de la température ambiante qui est inférieure à un point de congélation d'eau, et de la présence de précipitations à l'extérieur du véhicule, faisant ainsi fondre la neige et/ou la glace sur la partie orientée vers l'extérieur de la doublure de caisse de camion (1005).

2. Appareil destiné à faire fondre la neige d'une partie orientée vers l'extérieur d'une doublure de caisse de camion (1205) positionnée à l'intérieur d'une caisse de camion (1200) d'un véhicule,
l'appareil comprenant :
une pluralité d'éléments chauffants (1210) assemblés dans un ensemble séparé et positionnés au-dessus de la doublure de caisse de camion (1205), et
un dispositif de commande programmable (110) (205) (505), dans lequel
la pluralité d'éléments chauffants (1210) sont couplés électriquement à au moins l'un d'un système d'alimentation embarqué (220) et
d'une source d'alimentation électrique à distance (225) par l'intermédiaire d'un relais ;
la pluralité d'éléments chauffants (1210) sont moulés dans des moules ou formés en tant que partie de moules à l'aide d'un procédé de moulage ; et,
l'appareil comprend en outre :
un capteur de précipitations (120) ;
un capteur de température de surface (125) ;
un capteur de température ambiante (130) ; et
un matériau isolant (1220) prévu entre l'ensemble caisse de camion et l'ensemble séparé (1215) des éléments chauffants (1210),
dans lequel le dispositif de commande programmable (110) (205) (505) est configuré pour activer et désactiver la pluralité d'éléments chauffants (1210),
le dispositif de commande programmable (110) (205) (505) comprenant :
une unité de mémoire (140) pour stocker une température de surface limite, et un ensemble de modules de programme, et
un processeur (135) pour exécuter l'ensemble de modules de programme, dans lequel l'ensemble de modules de programme comprend :
un module d'entrée (145), exécuté par le processeur (135), configuré pour :
recevoir des informations concernant l'une de la présence et de l'absence de précipitations à l'extérieur du véhicule, par l'intermédiaire du capteur de précipitations (120), et,
recevoir des informations concernant une température de surface sur une partie externe du véhicule par l'intermédiaire du capteur de température de surface (125), et,
recevoir des informations concernant une température ambiante à l'extérieur du véhicule par l'intermédiaire du capteur de température ambiante (130) ; et,
un module de commande de réchauffeur (150), exécuté par le processeur (135), configuré pour :
désactiver la pluralité d'éléments chauffants (1210) sur la base de la température de surface qui est supérieure à la température de surface limite, et,
activer la pluralité d'éléments chauffants (1210) sur la base de la température ambiante qui est inférieure à un point de congélation d'eau, et de la présence de précipitations à l'extérieur du véhicule, faisant ainsi fondre la neige et/ou la glace sur la partie orientée vers l'extérieur de la doublure de caisse de camion (1205).

3. Appareil selon la revendication 1 ou 2, dans lequel la pluralité d'éléments chauffants (1010) (1210), lorsqu'ils sont activés, transfèrent par conduction de la chaleur à la partie orientée vers l'extérieur de la doublure de caisse de camion (1005) (1205).

4. Appareil selon la revendication 1 ou 2, dans lequel le système d'alimentation embarqué (220) comporte au moins l'un de batteries embarquées ou de supercondensateurs.

5. Appareil selon la revendication 1 ou 2, dans lequel la caisse de camion (1000) (1200) est au moins l'une parmi une caisse de camionnette, une caisse de wagon plate-forme, caisse de camion semi-remorque, caisse de camion à chargement ouvert et une caisse de wagon porte-rails.

6. Procédé destiné à faire fondre la neige d'une partie orientée vers l'extérieur d'une doublure de caisse de camion (1005) positionnée à l'intérieur d'une caisse de camion (1000) d'un véhicule,
**caractérisé en ce que**
le procédé comprend :
le stockage dans une unité de mémoire (140) d'une température de surface limite et d'un ensemble de modules de programme ;
la réception, par un processeur (135) exécutant le module d'entrée (145), d'informations concernant l'une de la présence et de l'absence de précipitations à l'extérieur du véhicule, à partir d'un capteur de précipitations (120) ;
la réception, par le processeur (135) exécutant le module d'entrée (145), d'informations concernant une température de surface sur une partie externe du véhicule, à partir du capteur de température de surface (125) ;
la réception, par le processeur (135) exécutant un module d'entrée (145), d'informations concernant une température ambiante à l'extérieur du véhicule, à partir d'un capteur de température ambiante (130) ;
la désactivation, par le processeur (135) exécutant un module de commande de réchauffeur (150), d'une pluralité d'éléments chauffants (1010) sur la base de la température de surface qui est supérieure à la température de surface limite, dans lequel la pluralité d'éléments chauffants (1010) sont intégrés à l'intérieur de la doublure de caisse de camion (1005) et couplés électriquement à au moins l'un d'un système d'alimentation embarqué (220) et d'une source d'alimentation électrique à distance (225) par l'intermédiaire d'un relais ; et
l'activation de la pluralité d'éléments chauffants (1010) intégrés à l'intérieur de la doublure de caisse de camion (1005), par le processeur (135) exécutant le module de commande de réchauffeur (150), sur la base de :
la température ambiante qui est inférieure à un point de congélation d'eau, et
la présence de précipitations à l'extérieur du véhicule, faisant ainsi fondre la neige de la partie orientée vers l'extérieur de la doublure de caisse de camion (1005), dans lequel un matériau isolant (1015) est positionné entre la caisse de camion (1000) et la doublure de caisse de camion (1005) pour minimiser le transfert de chaleur vers la caisse de camion (1000) et
la pluralité d'éléments chauffants (1010) sont moulés dans un matériau de doublure de caisse avant le moulage ou le formage de feuilles de matériau de doublure de caisse ou sont moulés dans des moules ou formés en tant que partie de moules à l'aide d'un procédé de moulage.

7. Procédé destiné à faire fondre la neige d'une partie orientée vers l'extérieur d'une doublure de caisse de camion (1205) positionnée à l'intérieur d'une caisse de camion (1200) d'un véhicule,
**caractérisé en ce que**
le procédé comprend :
le stockage dans une unité de mémoire (140) d'une température de surface limite et d'un ensemble de modules de programme ;
la réception, par un processeur (135) exécutant le module d'entrée (145), d'informations concernant l'une de la présence et de l'absence de précipitations à l'extérieur du véhicule, à partir d'un capteur de précipitations (120) ;
la réception, par le processeur (135) exécutant le module d'entrée (145), d'informations concernant une température de surface sur une partie externe du véhicule, à partir du capteur de température de surface (125) ;
la réception, par le processeur (135) exécutant un module d'entrée (145), d'informations concernant une température ambiante à l'extérieur du véhicule, à partir d'un capteur de température ambiante (130) ;
la désactivation, par le processeur (135) exécutant un module de commande de réchauffeur (150), d'une pluralité d'éléments chauffants (1210) sur la base de la température de surface qui est supérieure à la température de surface limite,
dans lequel la pluralité d'éléments chauffants (1210) sont assemblés dans un ensemble séparé, positionnés au-dessus de la doublure de caisse de camion (1205) et couplés électriquement à au moins l'un d'un système d'alimentation embarqué (220) et
d'une source d'alimentation électrique à distance (225) par l'intermédiaire d'un relais ; et
l'activation de la pluralité d'éléments chauffants (1210), par le processeur (135) exécutant le module de commande de réchauffeur (150), sur la base de :
la température ambiante qui est inférieure à un point de congélation d'eau, et
la présence de précipitations à l'extérieur du véhicule, faisant ainsi fondre la neige de la partie orientée vers l'extérieur de la doublure de caisse de camion (1205), dans lequel un matériau isolant (1220) est prévu entre l'ensemble caisse de camion et l'ensemble séparé (1215) des éléments chauffants (1210) et
la pluralité d'éléments chauffants (1210) sont moulés dans des moules ou formés en tant que partie de moules à l'aide d'un procédé de moulage.

8. Procédé selon la revendication 6 ou 7, dans lequel la caisse de camion (1000) (1200) est au moins l'une parmi une caisse de camionnette, une caisse de wagon plate-forme, caisse de camion semi-remorque, caisse de camion à chargement ouvert et une caisse de wagon porte-rails.

9. Procédé selon la revendication 6 ou 7, dans lequel la pluralité d'éléments chauffants (1010) (1210), lorsqu'ils sont activés, transfèrent par conduction de la chaleur à la partie orientée vers l'extérieur de la doublure de caisse de camion (1005) (1205).

10. Procédé selon la revendication 6 ou 7, dans lequel le système d'alimentation embarqué (220) comporte au moins l'un de batteries embarquées ou de supercondensateurs.
